# EUROPÄISCHE PATENTSCHRIFT

(11) **EP 4 180 281 B1**
(45) Veröffentlichungstag und Bekanntmachung des Hinweises auf die Patenterteilung: **21.02.2024**
(21) Anmeldenummer: 21208268.9
(22) Anmeldetag: 15.11.2021
(51) Int. Cl.: B60S 3/06

(54) **FEATUREMODELLBASIERTE ANSTEUERUNG EINER WASCHANLAGE**
FEATURE MODEL-BASED CONTROL OF A WASHING SYSTEM
COMMANDE BASÉE SUR UN MODÈLE DE CARACTÉRISTIQUE D'UNE INSTALLATION DE LAVAGE

(43) Veröffentlichungstag der Anmeldung: 17.05.2023
(73) Patentinhaber: WashTec Holding GmbH, 86153 Augsburg (DE)
(72) Erfinder: MAYER, Stefan, 86356 Neusäss (DE); HEINZ, Bernhard, 86368 Gersthofen (DE)
(74) Vertreter: Schwarz, Claudia

(56) Entgegenhaltungen:
- CN-A- 105 205 468
- CN-A- 112 037 521
- DE-A1-102014 117 167
- DE-U1-202008 000 993
- US-A1- 2006 180 647
- US-A1- 2020 189 532

## Beschreibung

Die vorliegende Erfindung betrifft ein verbessertes Verfahren und System für die Fahrzeugwäsche mittels Waschanlagen. Die Erfindung betrifft insbesondere ein Steuerungssystem für eine Waschanlage, das zum Bereitstellen von Steuerdaten zur Steuerung und/oder Regelung der Waschanlage ein erzeugtes Featuremodell verwendet, ein Betriebsverfahren eines solchen Steuersystems und ein Computerprogramm.

Das Dokument CN 112 037 521 A beschreibt ein Verfahren zur Identifizierung eines Fahrzeugtyps zwecks Identifizierung eines Gefahrguttransporters, der gefährliche chemische Substanzen geladen hat. Die Identifizierung basiert auf einer Erkennung eines Erscheinungsbilds mittels einer dreidimensionalen Laser-Scanning-Ausrüstung, die mittels eines Computers ausgewertet wird. "Features" werden extrahiert und mit einer Fahrzeugmodell-Datenbank verglichen.

Das Dokument US 2020/189532 A1 beschreibt ein Steuersystem für eine Fahrzeugwascheinrichtung. Außer einer Daten-Sammel-Einheit mit Kamera-Erfassung des Fahrzeugs gibt es die Möglichkeit einer Kommunikationseinheit, die mit einem Endgerät eines Nutzers oder mit einem externen Fahrzeuginformationssystem-Server kommuniziert, um das äußere Erscheinungsbild des Fahrzeugs zu erhalten und einen Waschroboter entsprechend zu steuern.

Das Dokument DE 20 2008 000993 U1 beschreibt eine Erfassungseinrichtung, die eine Bild- und eine integrierte Entfernungsmess-Einrichtung umfasst zum dreidimensionalen Abtasten und Erfassen einer Fahrzeugoberfläche an einer Autowaschanlage oder anderweitigen Behandlungsanlage für Fahrzeuge mit Behandlungsaggregaten. Es werden dreidimensionale Bildinformationen erfasst, insbesondere eine Hüllkontur des gesamten Fahrzeugs.

Das Dokument US 2006/180647 A1 beschreibt Anwendungen von RFID-Tags. Hierzu gehören RFID-Tags in Autos mit Informationen für eine Autowäsche. Die Informationen können Fahrzeugmodell, Jahr, Lackfarbe, Lackart und Dimensionen des Autos umfassen sowie Fahrgestellnummer (VIN), Kennzeichen, Reifengröße und weitere für eine Autowäsche relevante Informationen.

Das Dokument CN 105 205 468 A beschreibt ein Fahrzeugwaschsystem, in dem ein Fahrzeugtyp automatisch erkannt wird. Die Fahrgestellnummer (VIN = Vehicle Information Number) wird mittels eines aufgenommenen Bilds und Bilderkennung ermittelt und mit einer Fahrgestellnummern-Datenbank verglichen, um Fahrzeugtyp-Informationen, Abmessungs-Informationen, Lack-Informationen und Ausführungs- ("style") Informationen zu erhalten und automatisch ein geeignetes Waschverfahren auszuwählen.

Das Dokument DE 10 2014 117167 A1 beschreibt eine Portalwaschanlage, bei der mindestens eine Karrosseriebürste und Radwaschbürste relativ zu einer Trageinrichtung beweglich sind. Die Relativstellung der Karrosseriebürsten und Radwaschbürsten kann an eine Kontur oder einen Typ eines Fahrzeugs angepasst werden, um eine gleichzeitige Reinigung eines Fahrzeugendes und von Rädern (z.B. beiden Rädern auf einer Radachse) zu ermöglichen.

Bei der Wäsche von heute auf dem Markt gängigen Fahrzeugen erweist es sich mitunter als problematisch, dass es eine Vielzahl von unterschiedlichen Fahrzeugtypen gibt, die eine spezifische Wäsche bzw. einen spezifischen Waschablauf erfordern, um die Wäsche mit bestmöglicher Qualität ausführen zu können. So gibt es Fahrzeugtypen, die am Heck zum Beispiel einen Spoiler oder andere Anbauteile oder im Bereich der Räder bestimmte Radkästen aufweisen, die ohne spezifische Steuerung des Waschablaufs häufig zu einem unzureichenden Waschergebnis führen.

Wünschenswert ist es deshalb, die genauen Umrisse der Karosserie bzw. die Kontur des Fahrzeugtyps einschließlich etwaiger Anbau- oder Bauteile am Fahrzeug bereits im Vorfeld der Wäsche zu kennen, um die Waschaggregate der Waschanlage auf die spezifischen Anforderungen des jeweiligen Fahrzeugtyps ansteuern bzw. einstellen zu können.

Der vorliegenden Erfindung liegt daher die Aufgabe zugrunde, einen Weg aufzuzeigen, mit dem es möglich wird, spezifische Anforderungen für den Waschablauf, die durch den zu waschenden Fahrzeugtyp bedingt sind, bei der Regelung und/oder Steuerung der Waschanlage und/oder des Waschablaufs berücksichtigen zu können. Weiterhin soll die Qualität des Waschergebnisses verbessert werden, während die Dauer des Waschvorganges verringert oder zumindest nicht erhöht werden soll.

Diese Aufgabe wird durch die beiliegenden unabhängigen Patentansprüche gelöst, insbesondere durch ein Steuersystem für eine Waschanlage zum Bereitstellen von Steuerdaten zur Steuerung und/oder Regelung der Waschanlage zur Fahrzeugwäsche von Fahrzeugen unter Verwendung eines erzeugten Featuremodells, durch ein computer-implementiertes Betriebsverfahren zum Betreiben des vorstehend genannten Steuersystems und ein Computerprogramm.

Gemäß einem ersten Aspekt wird die vorstehend genannte Aufgabe gelöst durch ein Steuersystem für eine Waschanlage zum Bereitstellen von Steuerdaten zur Steuerung und/oder Regelung der Waschanlage zur Fahrzeugwäsche von Fahrzeugen, umfassend:
- Eine Eingangsschnittstelle zum Erfassen von Eingangsdaten, die ein Fahrzeugmodell (bzw. einen Fahrzeugtyp, wie z.B. Tesla Model S) kennzeichnen und die zumindest einen Fahrzeugmodell-Datensatz und ein Baujahr-Datensatz des Fahrzeugs umfassen;
- Eine Modellschnittstelle zu einem Speicher, in dem ein erzeugtes Featuremodell gespeichert ist, das zu jeweils einem Satz von Eingangsdaten fahrzeugmodell-spezifische Features des Fahrzeugs auf zugeordnete Weise gespeichert hat;
- Eine lokale Recheneinheit, die dazu bestimmt ist, mit den erfassten Eingangsdaten auf das Featuremodell zuzugreifen, um die den erfassten Eingangsdaten zugeordneten Features des Fahrzeugtyps bzw. Fahrzeugmodells zu bestimmen;
- Eine Prozessorschnittstelle zu einem Prozessor, wobei der Prozessor dazu bestimmt ist, aus den vorhergehend bestimmten fahrzeugmodell-spezifischen Features Steuerdaten für eine Menge von Waschaggregaten der Waschanlage zu berechnen, die einen fahrzeugmodell-spezifischen und waschanlagen-spezifischen Waschablauf für das Fahrzeug repräsentieren,
- wobei das Steuersystem dazu bestimmt ist, die Waschaggregate der Waschanlage mit den berechneten Steuerdaten anzusteuern, wobei die Steuerdaten alle Features des Fahrzeugs berücksichtigen.

Das Steuersystem kann mit einem Betriebsverfahren, wie beansprucht und später beschrieben, betrieben werden. Es dient zur Anwendung eines bereits erzeugten Featuremodells. Das Featuremodell kann ereignis-basiert oder zeit-basiert einem Update unterzogen werden. Später beschrieben und nicht beansprucht ist ein Verfahren zum Erzeugen des Featuremodells.

Die Eingangsdaten werden auf der Eingangsschnittstelle erfasst und können vorzugsweise über eine App, die auf einem mobilen Endgerät eines Fahrzeughalters implementiert ist, auf einer Benutzerschnittstelle bzw. einer Human Machine Interface, HMI, erfasst werden. In diesem Fall ist die Eingangsschnittstelle auf einem mobilen Endgerät ausgebildet, das über eine entsprechende drahtlose Datenverbindung verfügt. Die Eingangsdaten können auch auf einer HMI erfasst werden, die beim Betreiber der Waschanlage implementiert ist. Die Eingangsdaten können auch auf einem lokalen Terminal der Waschanlage erfasst werden, das vom Halter des Fahrzeugs bedient wird. Die Eingangsdaten können über eine geeignete Sensorik, die vorzugsweise an der Waschanlage implementiert ist, verifiziert werden. Die Verifikation kann auf dem Steuersystem oder auf einem Prozessor ausgeführt werden, auf dem die App läuft, also z.B. auf einem mobilen Endgerät. Aus den Eingangsdaten kann mittels des Verfahrens das Fahrzeugmodell bzw. der Fahrzeugtyp (Tesla, Model Y, Bj, 2021) bestimmt werden. Mittels Zugriffes auf ein erzeugtes und gespeichertes Featuremodell können relevante Daten für die fahrzeugmodellspezifische Berechnung eines Waschablaufs und/oder weiteren Parametern zum Steuern der Waschaggregate zur Wäsche des Fahrzeugs berechnet werden. Vorteilhafterweise können die Eingangsdaten und/oder die daraus abgeleiteten bzw. berechneten Größen (wie die Steuerdaten) bereits vor der Wäsche und insbesondere vor dem ersten Überfahren des Fahrzeugs mit dem Portal bereitgestellt werden.

Die vorzugsweise auf der HMI eines mobilen Endgerätes erfassten Eingangsdaten können direkt an die lokale Recheneinheit auf der Waschanlage weitergeleitet werden. Alternativ oder kumulativ können die auf der HMI eines mobilen Endgerätes erfassten Eingangsdaten an einen Administrationsserver und/oder an den zentralen Server weitergeleitet werden. Der Administrationsserver kann zur Autorisierung der vom mobilen Endgerät angeforderten Wäsche auf der Waschanlage ausgebildet sein.

Das Featuremodell speichert zu jeweils einem Eingangsdatensatz die waschablauf-relevanten fahrzeugmodell/typ-spezifischen Features des Fahrzeugs. Beispielsweise zu einem ersten Eingangsdatensatz, wie z.B. Volvo, V70, Baujahr 2020, ein erstes Feature, z.B. Spiegel mit Positionsdaten, Größenangaben und optional noch Regelparametern, die einen Waschablauf zur Wäsche des Spiegels kennzeichnen, z.B. bei extra breiten Spiegeln, inwiefern die Zustellung des Aktors zur seitlichen Bewegung der Seitenbürste in Richtung zum Fahrzeug verringert werden muss. Das Featuremodell kann in einer (zentralen) Datenbank oder in einer einfachen Form als strukturierte tabellenartige Datenstruktur implementiert sein. Jeder Eintrag in dem Featuremodell kann über einen Identifikator gekennzeichnet werden. Der Eintrag zu einem Feature kann optional noch Anweisungsdaten umfassen, die Anweisungen zur vorteilhaften Ausführung des Waschablaufs kennzeichnen (z.B. Chemiezusatz notwendig, etc.). Das Featuremodell wird einmalig erstellt und kann dann dezentral auf jeder der angeschlossenen Waschanlagen deployed und dort lokal betrieben werden. Das Featuremodell kann aber auch dezentral in dem Steuersystem der jeweiligen Waschanlage implementiert sein und beispielsweise turnusmäßig einem Update unterzogen werden, so dass eine aktualisierte Instanz des Featuremodells auf z.B. den Controller und/oder eine SD-Karte der Waschanlage aufgespielt wird. Das Featuremodell ist keine Fahrzeugmodell, da es nur auf die Features des Fahrzeugs abstellt; es kann somit als eine spezifisch erzeugte komprimierte Form eines 2D/3D-Fahrzeugmodells verstanden werden.

Das Featuremodell wird bevorzugt mit einem automatischen Verfahren aus einem 2D- oder 3D-Konturmodell eines Fahrzeugtyps erzeugt. Das 2D/3D-Modell ist ein Konturmodell. Das Featuremodell ist eine automatisch erstellte, komprimierte Form des 2D- oder 3D-Konturmodells, indem es nur die für den Waschablauf bzw. für die Wäsche des Fahrzeugs relevanten Daten, wie z.B. relevante Positions- und/oder Größenangaben, für jedes der Features enthält. Dies sind vor allem Größenangaben und Positionsangaben von Anbauteilen, Ein- und/oder Ausbuchtungen am Fahrzeug, weil diese einen Einfluss auf den Waschablauf bzw. auf die Ansteuerung der Waschaggregate haben.

Das Featuremodell enthält somit Konturabschnitte und Positionsangaben und/oder Größenangaben von Anbauteilen, wie z.B. Rädern, Spiegeln, Griffen, Spoilern, Wischern, Nummernschildern (speziell hinten), Stoßstangen, Ersatzrädern und/oder Trittbrettern. Des Weiteren sind in dem Featuremodell nur die Übergänge von einem ersten Konturabschnitt (z.B. Motorhaube) zu einem zweiten Konturabschnitt (z.B. Windschutzscheibe) enthalten. Alle dazwischen liegenden Positionsangaben des zugrundeliegenden 2D/3D Modells werden gelöscht. Aus den Konturdaten des 2D/3DModells können insbesondere Abschnitte gelöscht werden, z.B. Konturdaten, die den Anfang des Abschnittes "Motorhaube" kennzeichnen und Konturdaten, die dessen Ende kennzeichnen werden beibehalten und aus dem 2D/3D-Modell in das Featuremodell übernommen, während alle dazwischen liegenden Konturdaten (die den Bereich der Motorhaube repräsentieren) gelöscht werden. Aus dem zugrundeliegenden 2D/3D Modell des Fahrzeugtyps werden somit nur relevante Positionsdaten für jedes Feature extrahiert. Farbe oder Innenraumdaten sind in dem Featuremodell beispielsweise nicht enthalten. Auch alle Daten, die keinen Einfluss auf die Wäsche und/oder den Waschablauf haben, werden herausgefiltert. Das Featuremodell ist somit im Vergleich zu dem 2D/3D-Modell wesentlich weniger speicherintensiv und umfasst nur wenige Kilobyte. Grundsätzlich kann der Grad der Kompression (2D/3D-Modell -> Featuremodell) anhand der Genauigkeit und/oder der Maschinentoleranzen der Waschanlage bestimmt werden. Das Featuremodell muss nur so genau sein, wie die Maschine bzw. die Waschanlage mit ihren Aggregaten arbeiten kann. So können z.B. Abweichungen von einer idealisierten Ebene um +/- 2 cm ignoriert werden.

Das Featuremodell kann für ausgewählte Fahrzeuge auch fahrzeugindividuell sein, wenn alle Features des Fahrzeuges in dem Featuremodell erfasst worden sind und das jeweilige Fahrzeug z.B. über das Kennzeichen eineindeutig identifiziert werden kann. Das Featuremodell ist dazu zentral in einem Speicher, z.B. in einer Online-Datenbank für Featuremodelle, verfügbar. Relevante Positions- und/oder Größenangaben und/oder geometrische Angaben zu jeweils einem Feature werden aus einem 2D- oder 3D-Modell des Fahrzeugtyps extrahiert. Ein Feature bezieht sich auf ein Fahrzeug und dessen Fahrzeuggeometrie und/oder Fahrzeugkontur. In einer bevorzugten Ausführungsform kann sich ein Feature insbesondere auf ein Serienfahrzeug beziehen. Ein Feature kann z.B. der Spiegel sein. Mit anderen Worten hat z.B. ein Volvo vom Typ V70 aus dem Baujahr 2020 immer ein Feature "Spiegel" an Position xyz in Größe abc. Ein Fahrzeug hat üblicherweise mehrere solcher Features.

Der Waschablauf erfordert den Einsatz von unterschiedlichen Waschaggregaten der Waschanlage zu unterschiedlichen Zeitpunkten. Der Waschablauf bzw. die Waschablaufdaten kennzeichnen den Zeitpunkt, die Dauer und/oder die Art des Betriebs eines Waschaggregates, wie z.B. den Zeitpunkt, die Dauer einer Aktivierung der Seitenbürste und wann eine Bürstenrotationsrichtungsumkehr zu erfolgen hat. Der Waschablauf bzw. die Waschablaufdaten sind abhängig von der Konfiguration der jeweiligen Waschanlage, insbesondere z.B. der installierten Waschaggregate und/oder der "Verbausituation". Ist ein drehbarer Dachtrockner mit zusätzlichen Sprührohren für Chemie/Schaum und Hochdruck installiert, hat das ganz andere Wasch- bzw. Trocknungsabläufe zur Folge als bei einem starren oder schwenkbaren Gebläse ohne Medienauftragssystem.

Ein Feature (z.B. Spiegel oder Spoilerkante) ist ein Merkmal des Fahrzeugs, das für die Qualitätsbeurteilung der Fahrzeugwäsche relevant ist. Ein Feature kann ein Bereich am Fahrzeug und/oder an dessen Außenkontur sein, wie z.B. ein Anbauteil. Das Feature kann aber auch auf geometrisch benachbarte Bereiche ausgeweitet werden, wie z.B. bei dem Feature "Radkasten". Der Radkasten lenkt die Waschbürste (Waschaggregat) ab, was zu einer schlechten Waschqualität im Bereich hinter dem Radkasten führt. Das Feature "Radkasten" wird deshalb bei der Behandlung auf den hinten benachbarten Bereich ausgedehnt.

Aus dem Feature können waschablauf-relevante Parameter berechnet werden. Ein Feature kann z.B. eine geometrische Eigenheit des Fahrzeugs sein, dessen geometrische Angaben (z.B. Länge, Höhe, Breite, Position) in stark vereinfachter Form mittels einer Vektordarstellung oder gar als Zahl dargestellt werden können. Ein Feature kann unterschiedliche Eigenschaften haben, wie z.B. Länge, Höhe, Breite, Position. Die Eigenschaften sind klassifizierend und führen zur Auswahl eines bestimmten Waschablaufs (Behandlungsroutine der Waschanlage). Ein Feature ist vorzugsweise fahrzeugmodell- bzw. fahrzeugtyp-spezifisch. Es kann aber muss nicht fahrzeug-individuell sein. Tuningteile sind zum Beispiel fahrzeug-individuell. Bei eindeutiger Identifikation des jeweiligen Fahrzeugs, beispielsweise durch eine Nummernschilderkennung, kann ein perfekt angepasster Waschablauf auch für die Tuningteile bestimmt werden.

Die lokale Recheneinheit kann z.B. im Controller der Waschanlage implementiert sein. Die lokale Recheneinheit kann aus einem Speicher einlesen, welche Waschaggregate in der Waschanlage in welcher Form und Version verbaut sind. Die lokale Recheneinheit hat somit Kenntnis über die "Verbausituation" der Waschanlage und kann dies bei der Berechnung der Steuerdaten berücksichtigen.

Der Prozessor kann auch in dem Steuersystem und insbesondere in der lokalen Recheneinheit ausgebildet sein und damit lokal auf der Waschanlage implementiert sein, so dass es sich bei der Prozessorschnittstelle um eine interne Schnittstelle, z.B. Busschnittstelle handelt. Alternativ kann der Prozessor auch auf einem zentralen Server implementiert sein, der über eine Netzwerkschnittstelle (z.B. http/s) mit dem Steuersystem in Datenaustausch steht.

Steuerdaten sind Daten, die zur Steuerung der Fahrzeugwäsche mittels der Waschaggregate der Waschanlage relevant sind. Die Menge der Steuerdaten kennzeichnet die konzertierte Steuerung der Waschaggregate zur fahrzeugtyp-spezifischen Wäsche. Die Steuerdaten initiieren, steuern und/oder regeln den fahrzeugtyp-spezifischen Waschablauf. Die Steuerdaten sind spezifisch für eine Waschanlage, und insbesondere abhängig von der jeweiligen Verbausituation auf der Waschanlage und/oder deren Konfiguration. Die Steuerdaten können spezifisch für jeweils ein Waschaggregat der Waschanlage sein. Die Steuerdaten werden spezifisch und individuell für jeweils einen Fahrzeugtyp berechnet. So hat zum Beispiel ein Mini andere Steuerdaten als ein BMW Typ i4. Die Steuerdaten werden vor Beginn der Wäsche bereitgestellt. Die Steuerdaten können insbesondere vor einer ersten Bewegung einer Komponente der Waschanlage (zum Beispiel dem ersten Überfahren eines Portals) zur Fahrzeugwäsche bereitgestellt werden.

In einer weiteren bevorzugten Ausführungsform der Erfindung ist die Waschanlage eine Portalanlage, eine Waschstraße oder eine Nutzfahrzeugwaschanlage. Bevorzugt wird das System für eine Portalwaschanlage verwendet werden. Alternativ kann das System auch für eine Waschstraße oder eine Nutzfahrzeugwaschanlage eingesetzt werden. Bei einer Waschstraße können die Waschaggregate (z.B. Dachbürste oder Seitenbürste) oder auch bei Verwendung einer Lineartechnologie die Fahrbewegung der Gantry Featuremodell-basiert angesteuert werden. Wenn z.B. für ein Fahrzeug in der Folge von Fahrzeugen, die in der Waschstraße gewaschen werden sollen, ein bestimmtes Feature erfasst bzw. bestimmt wird (z.B. eine bestimmte Steigung des Fahrzeugs an der Front), kann z.B. die linear Dachbürste entsprechend angesteuert werden (z.B. Bewegung, Zustellung und/oder Drehrichtungswechsel) oder die Bewegung des Linearantriebs kann abweichend angesteuert werden, um dem bestimmten Feature Rechnung zu tragen. Wenn für das nachfolgende Fahrzeug ein anderes Feature bestimmt wird, dann erfolgt ggf. eine andere Ansteuerung, wie z.B. eine andere Zustellung der Dachbürste und/oder anderer Arbeitsaggregate.

Der Begriff "Fahrzeugmodell" ist in dieser Anmeldung im Sinne von Fahrzeugtyp zu verstehen und meint nicht eine Wissensmodellierung des Fahrzeugs und bezieht sich auch nicht auf ein maschinelles Lernmodell. Ein Fahrzeugmodell bzw. Fahrzeugtyp kann z.B. ein Volvo V70 oder ein Tesla Model X sein. Das Fahrzeugmodell ist eindeutig in dem Fahrzeugmodell-Datensatz codiert. Der Fahrzeugmodell-Datensatz ist gleichbedeutend mit einem Fahrzeugtyp-Datensatz und kennzeichnet, um welches KFZ-Modell bzw. um welchen KFZ-Typ es sich handelt. Der Fahrzeugmodell-Datensatz kann als String in einer alphanumerischen Datenstruktur encodiert sein. Um das Fahrzeug weiter zu kennzeichnen, wird zusätzlich zu dem Fahrzeugmodell-Datensatz ein Baujahr-Datensatz erfasst, der das Baujahr des Fahrzeugs kennzeichnet. Beide Datensätze zusammen werden in Form von Eingangsdaten erfasst.

In dem erzeugten Featuremodell (erzeugte und gespeicherte Datenstruktur) sind Zuordnungen zwischen Eingangsdaten (also: Fahrzeugmodell-Datensatz und Baujahr-Datensatz) und Features abgelegt bzw. gespeichert. Die in dem Featuremodell gespeicherten Features sind somit immer fahrzeugmodell- bzw. fahrzeugtyp-spezifisch. Ein VW Käfer, Baujahr 1980 hat andere Features als ein BMW X5, Baujahr 2020. Das Featuremodell kann z.B. als relationale Datenbank betrieben werden.

In einer weiteren bevorzugten Ausführungsform der Erfindung ist die Eingangsschnittstelle als HMI (human machine interface) ausgebildet. Der Client-Anteil der HMI kann - muss aber nicht - insbesondere in einer App auf einem mobilen Gerät ausgebildet sein, das dem Halter und/oder Fahrer des Fahrzeugs zugeordnet ist.

In einer weiteren bevorzugten Ausführungsform der Erfindung umfasst das Steuersystem eine Interaktionsschnittstelle. Die Interaktionsschnittstelle kann alternativ oder kumulativ zur Eingangsschnittstelle ausgebildet sein. Der Client-Anteil der Interaktionsschnittstelle kann auf einem mobilen Gerät ausgebildet sein. Der Client-Anteil der Interaktionsschnittstelle kann insbesondere zur Anzeige einer ersten virtualisierten Darstellung eingerichtet sein, wobei die erste virtualisierte Darstellung eine Fahrzeugkontur oder eine 2D-Ansicht des Fahrzeuges auf Basis der erfassten Eingangsdaten ist. Die erste virtualisierte Darstellung dient zur einfachen und wenig fehleranfälligen Verifikation der Eingangsdaten durch den Anwender. Die Interaktionsschnittstelle dient somit zur direkten und manuellen Überprüfung der Eingangsdaten durch den Anwender. Dies hat den Hintergrund, dass es für einen Anwender in der Regel leichter ist, für eine grafische Darstellung einer Karosserie oder einer Fahrzeugkontur zu bestimmen, ob das sein oder ihr Fahrzeug ist, als wenn beispielsweise Längen- oder Breiten oder Typangaben als Zahlen zur Verifikation angeboten werden. Die erste virtualisierte Darstellung der Fahrzeugkontur oder der 2D Ansicht wird in Antwort auf die erfassten Eingangsdaten durch eine Applikation berechnet, die auf dem mobilen Endgerät implementiert ist. Zur Berechnung greift die Applikation auf einen Speicher (lokal oder extern über eine Netzwerkanbindung) zu, in dem zu der Menge von Eingangsdatensätzen, jeweils eine erste virtualisierte Darstellung, insbesondere ein Bild in einem digitalen Format (jpeg, png, giff etc.), zugeordnet gespeichert ist. Nach Anzeige der ersten virtualisierten Darstellung kann der Anwender über ein Eingabefeld die Eingabe bestätigen oder verwerfen und erhält im letztere Fall nochmal die Gelegenheit, die Eingangsdaten zu korrigieren. Gegebenenfalls kann dies iterativ bis zu einer konfigurierbaren Schwelle wiederholt werden.

Die Ausgabeschnittstelle kann alternativ oder kumulativ zur Interaktionsschnittstelle ausgebildet sein. Die Interaktionsschnittstelle kann die Eingangsschnittstelle umfassen. Die Interaktionsschnittstelle kann alternativ oder kumulativ zur Eingangsschnittstelle und zur Ausgabes chnittstelle ausgebildet sein. Die Ausgabeschnittstelle ist vorzugsweise auf einem mobilen Endgerät ausgebildet, das in Netzwerkverbindung (z.B. http/s) mit dem Steuersystem steht. Die Interaktionsschnittstelle kann alternativ oder kumulativ auch auf der Waschanlage selbst und/oder einem zugeordneten zentralen Server ausgebildet sein, der z.B. mehrere Waschanlagen steuert und/oder administriert (der Waschanlagen-übergreifend steuert und/oder regelt).

Nach der Erfindung umfasst das Steuersystem eine erste Sensoreinheit, die dazu bestimmt ist, erste Sensordaten zu erfassen, die kennzeichnend oder mit-kennzeichnend für die Eingangsdaten sind und die von einem ersten Verifikationsmodul zur algorithmischen und automatischen ersten Verifikation der erfassten Eingangsdaten verwendet werden, wobei das erste Verifikationsmodul dazu bestimmt ist, die zur Verifikation dienenden erfassten ersten Sensordaten mit den erfassten Eingangsdaten zu vergleichen, um bei Abweichungen eine Warnnachricht an den Betreiber der Waschanlage mit einem Signal zum Wechsel von einem Featuremodell-basierten Programm in ein Normalprogramm auszugeben, und die Waschanlage im Normalprogramm zu betreiben. Dieser Schritt dient der Sicherheit, indem fehlerhafte Eingaben des Anwenders in Folge nicht zu falschen Berechnungen und/oder einem fehlerhaften Waschablauf führen und nochmals einer zusätzlichen Überprüfung auf Basis und mittels ersten Sensordaten unterzogen werden. Die erste Sensoreinheit kann z.B. eine optische Einheit sein, die z.B. bei der ersten Überfahrt des Portals, bestimmten Sensordaten, wie z.B. Länge, Breite des Fahrzeugs, erfasst. Die Sensoreinheit kann alternativ oder kumulativ LIDAR Sensoren, akustische Sensoren, Ultraschall- und/oder Radarsensoren umfassen. Primär werden Lichtschrankensensoren und Methoden der Bildverarbeitung eingesetzt.

"Mit-kennzeichnend" meint in diesem Kontext zusammen mit anderen Sensordaten kennzeichnend für die Eingangsdaten und damit für ein Fahrzeugmodell'.

Die algorithmische erste Verifikation dient dazu, die von dem Anwender über ein HMI eingegebenen Daten mit einem automatischen Verfahren zu verifizieren. Die erste Verifikation basiert auf ersten Sensordaten, Referenzdaten und/oder Grenzwerten. Der Verifikationsalgorithmus kann z.B. auf einen Speicher zugreifen, in dem zu jedem Eingangsdatensatz eine Menge von Parametern hinterlegt ist, wobei die Parameter sensorisch oder anderweitig erfasst werden können. So kann z.B. hinterlegt sein, dass ein BMW i3, Baujahr 2020, üblicherweise eine Höhe von z cm und eine bestimmte Länge hat und die Breite nicht mehr als *abc* cm beträgt. Diese Werte können dann mit sensorisch ermittelten ersten Sensordaten und/oder den Eingaben des Anwenders zum Eingangsdatensatz abgeglichen werden. Bei Abweichungen werden Korrekturmaßnahmen (zur Korrektur der Eingabe auf dem HMI) und/oder Warnhinweise erzeugt.

Die erste Verifikation zur Überprüfung der Eingangsdaten läuft im Normalfall direkt auf der Maschinensteuerung, die Messdaten zum Fahrzeug mit Modelldaten vergleicht. Z.B. kann eine Vermessung der Länge des Fahrzeugs und dessen Achsen mit Lichtschranken erfolgen. Die Höhenkontur des Fahrzeugs kann über eine Sensorik an der Bürste bzw. Lichtschranken am Dachtrockner überprüft werden. In erster Linie wird bei Abweichungen auf das nicht featuremodell-basierte Waschen zurückgewechselt. Die Warnmeldung ist optional. Vorzugsweise wird eine Nachricht an eine Applikation auf dem mobilen Endgerät abgesetzt, die dem Anwender signalisiert, dass eine Feature-basierte Wäsche nicht durchgeführt werden konnte und das Fahrzeug im Normalprogramm gewaschen wird.

In einer weiteren bevorzugten Ausführungsform der Erfindung umfasst das Steuersystem eine zweite Sensoreinheit, die dazu bestimmt ist, zweite Sensordaten zu erfassen, die kennzeichnend oder mit-kennzeichnend für ein Feature sind und die von dem zweiten Verifikationsmodul zur algorithmischen und automatischen zweiten Verifikation der bestimmten Features verwendet werden, wobei das zweite Verifikationsmodul dazu bestimmt ist, die zur Verifikation dienenden erfassten zweiten Sensordaten mit Daten zu vergleichen, die dem jeweiligen Feature und insbesondere einem bestimmten Fahrzeugmodell/typ zugeordnet sind, um bei Abweichungen eine Warnnachricht an den Betreiber der Waschanlage und/oder ein Fehlersignal an eine zentrale Recheneinheit zu senden, die das Featuremodell betreibt, das als Eintrag zu dem jeweiligen bestimmten Feature gespeichert wird. Die Warnnachricht an den Betreiber kann ein Wechselsignal umfassen, das den Wechsel von einem featuremodell-basierten Waschablauf in einen Normalwaschablauf auslöst.

Die zweiten Sensordaten können beispielsweise Länge, Breite und/oder Höhe oder andere Maß- und/oder Größenangaben des Fahrzeugs betreffen.

Das zweite Verifikationsmodul kann alternativ oder kumulativ zum ersten Verifikationsmodul bereitgestellt werden. Das zweite Verifikationsmodul dient zur zweiten Verifikation oder Plausibilitätskontrolle der automatisch bestimmten Features. Die zweite Verifikation dient dazu, zu vermeiden, dass die Waschanlage z.B. mit falschen Steuerdaten angesteuert wird, die aufgrund von falschen Features nicht korrekt berechnet werden konnten. Wenn z.B. das Feature "Spiegel" mit der Breite 10cm erfasst wurde und daraufhin die Steuerdaten eine Zustellung der Seitenbürste veranlassen, die auf die 10cm angepasst ist, aber der Spiegel tatsächlich wesentlich breiter ist und dies durch die zweiten Sensordaten erfasst wurde, so kann veranlasst werden, dass die Waschanlage im Normalbetrieb (nicht featuremodellbasierter Betrieb) betrieben wird. Auch ein Fehlersignal kann an den Betreiber des Featuremodells zur Korrektur des Features des Featuremodells ausgegeben werden.

In einer weiteren bevorzugten Ausführungsform der Erfindung ist die lokale Recheneinheit dazu bestimmt, zu den bestimmten Features eine zweite, vorzugsweise grafische, virtualisierte Darstellung des Fahrzeugs und/oder dessen Features zu erzeugen und wobei eine Ausgabeschnittstelle, die insbesondere an der Waschanlage angeordnet sein kann, dazu bestimmt ist, die erzeugte zweite virtualisierte Darstellung zum Zwecke der Verifikation auszugeben.

Die Ausgabeschnittstelle kann auf einem Gerät eines Anwenders ausgebildet sein. Als Anwender ist hier der Betreiber der Waschanlage oder der Betreiber des Featuremodells gemeint (und nicht der Anwender, der die Eingangsdaten eingegeben hat). Alternativ oder kumulativ können die berechneten Steuerdaten auch zum Zwecke der Verifikation ausgegeben werden. Hier allerdings nicht an den Fahrer des Fahrzeugs, sondern an den Betreiber der Waschanlage.

In einer weiteren bevorzugten Ausführungsform der Erfindung umfassen die bestimmten Features des Fahrzeugs Positionsdaten und/oder Größenangaben von fahrzeugmodell-spezifischen Anbauten, Aus- und/oder Einbuchtungen. Fahrzeug-spezifische Aus- und/oder Einbuchtungen können z.B. Anbauteile sein, wie z.B. Spiegel, Spoiler, Scheibenwischer. Die Einbuchtungen können z.B. als eine Nummernschildmulde ausgebildet sein.

In einer weiteren bevorzugten Ausführungsform der Erfindung ist das Featuremodell kontinuierlich erweiterbar und modifizierbar. Dies erfolgt vorzugsweise durch Änderung oder Hinzufügung von neuen Features, wobei das so erweiterte Featuremodell in einem Updatevorgang in den Speicher (zugreifbar über die Modellschnittstelle) eingespielt werden kann.

Vorstehend wurde die Lösung der Aufgabe anhand des Steuersystems, also für eine Vorrichtung beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die verfahrensbasierten Ansprüche (die beispielsweise auf ein Betriebsverfahren oder ein Verfahren zum Erzeugen des Featuremodells oder auf ein Computerprogrammgerichtet sind) mit den Merkmalen weitergebildet sein, die in Zusammenhang mit dem System beschrieben oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt. Die vorstehend im Zusammenhang mit dem System beschriebenen bevorzugten Ausführungsform der Erfindung werden nicht explizit für das Verfahren wiederholt. Im Allgemeinen sind in der Informatik eine Software-Implementierung und eine entsprechende Hardware-Implementierung (z. B. als eingebettetes System) gleichwertig. So kann z. B. ein Verfahrensschritt zum "Speichern" von Daten mit einer Speichereinheit und entsprechenden Anweisungen zum Schreiben von Daten in den Speicher durchgeführt werden. Um Redundanz zu vermeiden, wird das Verfahren deshalb nicht noch einmal explizit beschrieben, obwohl es auch in den alternativen Ausführungsformen, die in Bezug auf das System beschrieben sind, verwendet werden kann.

In einem weiteren Aspekt bezieht sich die Erfindung auf ein computer-implementiertes Betriebsverfahren zum Betreiben eines Systems - wie vorstehend beschrieben - zur Fahrzeugwäsche eines Fahrzeugs, mit folgenden Schritten:
- Erfassen von Eingangsdaten, die ein Fahrzeugmodell bzw. Fahrzeugtyp kennzeichnen und die zumindest einen Fahrzeugmodell-Datensatz und ein Baujahr-Datensatz des Fahrzeugs umfassen;
- Mittels der lokalen Recheneinheit: Zugreifen auf einen Speicher mit den erfassten Eingangsdaten, wobei in dem Speicher ein Featuremodell gespeichert ist, das zu jeweils einem Satz von Eingangsdaten fahrzeugmodell-spezifische Features des Fahrzeugs auf zugeordnete Weise gespeichert hat, um die den erfassten Eingangsdaten zugeordneten Features zu bestimmen;
- Mittels der lokalen Recheneinheit: Zugreifen auf einen Prozessor mit den bestimmten Features, wobei der Prozessor dazu bestimmt ist, aus den bestimmten, fahrzeugmodell-spezifischen Features Steuerdaten für eine Menge von Waschaggregaten der Waschanlage zu berechnen, die einen fahrzeugmodell-spezifischen und waschanlagen-spezifischen Waschablauf für das Fahrzeug repräsentieren,
- Mittels der lokalen Recheneinheit: Bereitstellen der berechneten Steuerdaten an die Waschaggregate der Waschanlage zur Steuerung und/oder Regelung derselben, wobei die Steuerdaten alle Features des Fahrzeugtyps des Fahrzeugs und die Konfiguration der Waschanlage berücksichtigen.

In einem nicht beanspruchten Aspekt bezieht sich die Offenbarung auf ein computer-implementiertes Verfahren zum Erzeugen eines Featuremodells für eine konfigurierbare Menge von Fahrzeugen zur Anwendung in einem System nach einem der vorangehenden Systemansprüche, umfassend folgende Verfahrensschritte:
- Bereitstellen eines Modellspeichers, in dem eine Menge von 2D- oder 3D-(Fahrzeug)Konturmodellen gespeichert ist;
- Bestimmen einer Menge von Features zu jedem Fahrzeugmodell, das in dem Modellspeicher gespeichert ist; das Bestimmen kann mit unterschiedlichen Methoden ausgeführt werden. So kann dies manuell erfolgen. Bevorzugt sind jedoch Methoden der algorithmischen Bildverarbeitung (Bildverarbeitungssoftware). Letztere extrahiert aus den Rohdaten des 2D/3D-Konturmodells Extrema in der Außenkontur, die Einbuchtungen, Ausbuchtungen oder Anbauten am Fahrzeug kennzeichnen oder repräsentieren. Diese gefundenen Extrema zusammen mit den jeweiligen Positionsangaben werden dann mit einem Klassifikationsalgorithmus einer Menge von Features zugeordnet. Diese Zuordnung kann regelbasiert sein. Zum Beispiel kann ein Extremum der Außenkontur in einem Abstand von der Vorderfront des Fahrzeugs von N Metern einen Außenspiegel zugeordnet werden. Die Extrema können somit in einem Klassifikationsalgorithmus in vorkonfigurierte Klassen von Features klassifiziert werden.
- Anwenden einer Kompressionsfunktion für jedes Feature, um aus jeweils einem 2D/3D-Konturmodell die relevanten Positions- und/oder Größenangaben und/oder geometrischen Daten zu extrahieren, die ein Feature betreffen (also z.B. Höhe, Länge und Breite des Features "Spiegel" oder "Spoiler");
- Speichern der extrahierten relevanten Positionsdaten für jedes Feature als Featuremodell.

Das Bestimmen der Features erfolgt unter Zugriff auf eine Regelbasis, die in einem Speicher gespeichert sein kann. Die Regelbasis ordnet Extrema und/oder Eigenschaften der 2-D/3D-Rohdaten des Konturmodells und/oder Positionsangaben und/oder Größenangaben anhand der Regeln der Regelbasis bestimmten Features zu.

Die Verfahrensschritte werden Anwenden der Kompressionsfunktion und das Speichern erstens iterativ für alle Features eines Fahrzeugtyps und zweitens iterativ für alle Fahrzeuge der konfigurierbaren Menge von Fahrzeugen ausgeführt.

Bei dem Verfahren zum Erzeugen des Featuremodells kann nach der Extraktion eines Features eine zweite virtualisierte Darstellung des Features erzeugt werden, die auf einer Ausgabeschnittstelle zum Zwecke der Verifikation ausgegeben werden kann. Dies kann auch zum Training bei der Erzeugung des Featuremodells verwendet werden.

In einem weiteren Aspekt betrifft die Erfindung ein Computerprogramm, wobei das Computerprogramm in eine Speichereinheit einer lokalen Recheneinheit ladbar ist und Programmcodeabschnitte enthält, um die lokale Recheneinheit zu veranlassen, das Betriebsverfahren zum Betreiben eines Steuersystems zur Fahrzeugwäsche, wenn das Computerprogramm in der lokalen Recheneinheit ausgeführt wird.

Unter einem "Prozessor" oder einer (lokalen) "Recheneinheit" kann im Zusammenhang mit der Erfindung beispielsweise eine Maschine oder eine elektronische Schaltung verstanden werden. Das Verfahren wird dann "embedded" ausgeführt. Bei einem Prozessor kann es sich insbesondere um einen Hauptprozessor (engl. Central Processing Unit, CPU), einen Mikroprozessor oder einen Mikrocontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder z. B. ein Multi-Chip-Modul, z. B. ein 2,5D oder 3D Multi-Chip-Modul, bei dem insbesondere mehrere sogenannte Dies direkt oder über einen Interposer miteinander verbunden sind oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

In der folgenden detaillierten Figurenbeschreibung werden nicht einschränkend zu verstehende Ausführungsbeispiele mit deren Merkmalen und weiteren Vorteilen anhand der Zeichnung besprochen.

### Kurze Beschreibung der Figuren

- FIG. 1: ist eine schematische Übersichtsdarstellung eines Steuersystems zur Steuerung und/oder Regelung einer Waschanlage auf Basis eines Featuremodells
- FIG. 2: ist eine schematische Übersichtsdarstellung einer Waschanlage mit einem Steuersystem in Interaktion mit einem mobilen Endgerät gemäß einer alternativen Ausführungsform der Erfindung;
- FIG. 3: ist ein Block Diagramm eines Steuersystems mit einem ersten Verifikationsmodul nach der Erfindung;
- FIG. 4: ist ein Blockdiagramm eines Steuersystems mit einem zweiten Verifikationsmodul;
- FIG. 5: zeigt an einem Ausführungsbeispiel ein mobiles Endgerät mit einer Interaktionsschnittstelle, die zur Ausgabe einer ersten virtualisierten Darstellung einer berechneten Fahrzeugkontur bestimmt ist;
- FIG. 6: zeigt in einer schematischen Darstellung die Interaktion zwischen der lokalen Recheneinheit und einer Ausgabeschnittstelle zur Darstellung einer zweiten grafischen virtualisierten Darstellung der bestimmten Features;
- FIG. 7: ist ein Ablaufdiagramm für ein Verfahren zum Erzeugen des Featuremodells und
- FIG. 8: ist ein weiteres Ablaufdiagramm für ein Betriebsverfahren zum Betreiben des Steuerungssystems.

### Beschreibung von Ausführungsbeispielen anhand der Figuren

Der vorliegenden Erfindung liegt die Problemstellung zugrunde, dass einige Fahrzeugtypen, bestimmte geometrische Merkmale aufweisen, die regelmäßig zu Qualitätseinbußen bei der Fahrzeugwäsche führen, wie zum Beispiel bestimmte Anbauteile, bei denen die Seitenbürsten oder die Dachbürsten nur bis zu einem bestimmten Grenzpunkt zugestellt werden können, um Beschädigungen an dem jeweiligen Anbauteil zu vermeiden. In Folge kommt es häufig dazu, dass dem jeweiligen Anbauteil benachbarte oder angrenzende Bereiche nur unvollständig gewaschen werden können. Der Betreiber kann natürlich in einem Sonderprozess manuell in den Waschvorgang eingreifen; dies erhöht jedoch die Komplexität und die Betriebskosten und senkt die Performanz.

Die vorliegende Erfindung basiert auf der Überlegung und Beobachtung, dass die Merkmale, die das Risiko von Qualitätseinbußen tragen, vom jeweiligen Fahrzeugtyp bzw. Fahrzeugmodell abhängig sind.

Das Ziel ist es also, dass Fahrzeugmodell bereits im Vorfeld der Wäsche automatisch zu bestimmen, um daraus die relevanten Merkmale bzw. Features, die für die Steuerung des Waschablaufs relevant sind, zu ermitteln, um damit fahrzeugmodell-spezifische und Waschanlagen-spezifische Steuerdaten zur Steuerung und/oder Regelung des Waschablaufs zu berechnen und bereitzustellen.

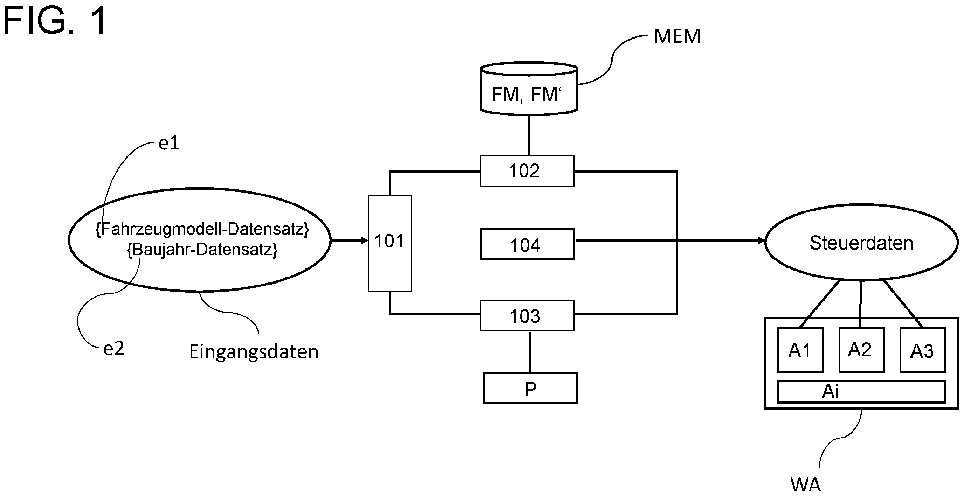

**Figur** 1 zeigt ein Steuersystem 10, das eine Eingangsschnittstelle 101 aufweist, die dazu dient Eingangsdaten zu erfassen. Als Eingangsdaten werden zumindest zwei Datensätze erfasst, nämlich:
1. ein Fahrzeugmodell-Datensatz e1, der das Fahrzeugmodell bzw. den Fahrzeugtyp eindeutig kodiert, wie zum Beispiel Tesla Model X oder BMW i3;
2. ein Baujahr-Datensatz e2, der das Baujahr des Fahrzeugs eindeutig kodiert, wie zum Beispiel die Jahreszahl 2020.

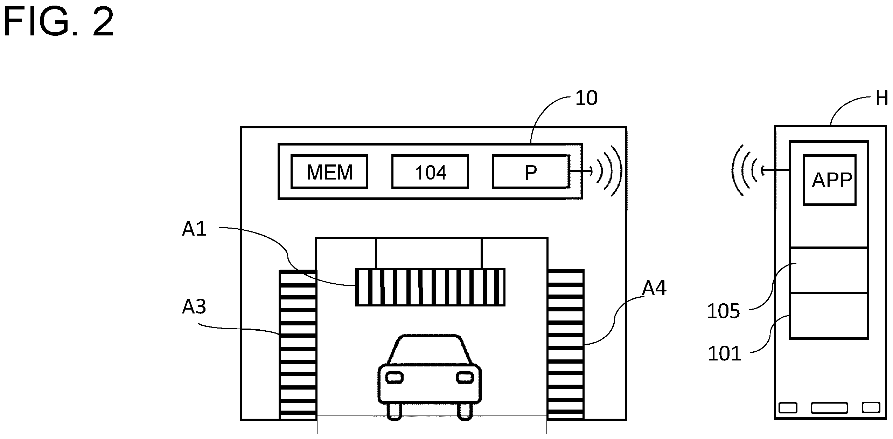

In alternativen Ausführungsformen können neben den beiden vorstehend genannten Datensätzen e1, e2 zusätzlich noch weitere Datensätze als Eingangsdaten erfasst werden. In der bevorzugten Ausführungsform werden die Eingangsdaten über eine Applikation (App) auf einem mobilen Endgerät, das dem Halter oder Fahrer des Fahrzeugs zugeordnet ist, erfasst. Dazu kann eine Interaktionsschnittstelle 105 bereitgestellt werden (in Figur 1 nicht dargestellt, sondern in Figur 2).

Das Steuermodul 10 umfasst des Weiteren eine lokale Recheneinheit 104, die zur Ausführung der Algorithmen und der digitalen Datenverarbeitung dient. Das Steuermodul 10 weist eine Modellschnittstelle 102 auf, über die das Steuersystem 10 auf einen Speicher MEM zugreifen kann, in dem ein Featuremodell FM bzw. ein Update des Featuremodells FM' gespeichert ist. In dem Featuremodell sind Datentruppe abgespeichert die zu einem Satz von Eingangsdaten fahrzeugmodell-spezifische Features speichern. In einer stark vereinfachten Form könnte der Inhalte des Featuremodells FM wie folgt aussehen:

| **Eingangsdaten** | **Feature mit geometrischen oder Positionsdaten** |
|---|---|
| Tesla, Model Y, Baujahr 2020 | F1: Spiegel in Höhe 0,6m und Breite 0,3m |
| | F2: Heckspoiler in Höhe 0,9m und Auskragung 0,2m |
| BMW, X5, Baujahr 2009 | F1: Gesamtlänge 4,85m |
| | F2: Vorderrad: Position X=0,86m Durchmesser d=0,73m |
| | F3: Hinterrad: Position X=3,79m d=0,73 |
| | F4: Front: X=0m Z=0,954m |
| | F5: Motorhaube: X=1,31m Z=0,92 |
| | F6: Frontscheibe: X=2,11m Z=2,14m |
| | F7: Dach: X=4,33 Z=1,65m |
| | F8: Heckscheibe: X=4.77m Z=1,23m |
| | F9: Spiegel: X=1,75m Z=1,16m Typ: 3 |
| | F10: Heckspoiler: X=4,32m Z=1,65m Typ:2 |

Das Steuersystem 10 umfasst des Weiteren eine Prozessorschnittstelle 103, über die die lokale Recheneinheit 104 auf einen Prozessor P zugreifen kann. Der Prozessor P ist eingerichtet, um zu jeweils einem bestimmten Feature (das aus dem Feature Modell FM zu den jeweiligen Eingangsdaten e1, e2 ausgelesen worden ist) einen Satz von Steuerdaten zu berechnen. Die berechneten Steuerdaten werden dann über geeignete Schnittstellen an die Waschaggregate Ai der Waschanlage WA zur Steuerung und/oder Regelung weitergeleitet. Ein erstes Waschaggregat A1 kann zum Beispiel die rechte Seitenbürsten, ein zweites Waschaggregat A2 kann die linke Seitenbürste und ein drittes Waschaggregat A3 kann der Felgenwäscher sein. Die jeweiligen Waschaggregate Ai benötigen Steuerdaten, um zum Beispiel die Zustellung und/oder die Dauer der Aktivierung des jeweiligen Waschaggregates einzustellen und/oder zu regeln auf Basis von erfassten Sensordaten (zum Beispiel Stromaufnahme des Motors).

In dem in Figur 1 dargestellten Ausführungsbeispiel ist das Steuersystem 10 als modulares System ausgebildet. Zum einen ist das Steuersystem 10 als separate Instanz zusätzlich zu der Waschanlage WA vorgesehen. Das Steuersystem 10 kann zum Beispiel eine autarke, eigene Recheneinheit sein, die mit einer Steuerung der Waschanlage WA in Datenaustausch steht. Zum anderen ist das Featuremodell FM und/oder der Prozessor P als separate Instanz zusätzlich zu der lokalen Recheneinheit 104 vorgesehen und können über die Modellschnittstelle 102 bzw. über die Prozessorschnittstelle 103 angesprochen und adressiert werden. Dieses Ausführungsbeispiel ist jedoch nur fakultativ. Üblicherweise wird das Featuremodell FM und/oder der Prozessor P direkt in der lokalen Recheneinheit 104 des Steuersystems 10 angeordnet sein. Das Steuersystem 10 wird vorzugsweise ebenfalls direkt auf einer Steuerung der Waschanlage WA implementiert sein oder mit dieser in Datenaustausch stehen.

**Figur 2** zeigt ein weiteres Ausführungsbeispiel zur Implementierung des Steuersystems 10. Die Waschanlage WA ist hier am Beispiel einer Portalwaschanlage dargestellt mit zwei Seitenbürsten A3, A4 und einer Dachbürste A1, die in Figur 2 lediglich schematisch angedeutet sind. Das Steuersystem 10 ist direkt auf der Waschanlage WA implementiert. Das Steuersystem 10 ist in diesem Fall nicht modular ausgebildet, sondern umfasst den Speicher MEM zur Speicherung des Featuremodells FM, die lokale Recheneinheit 104 und den Prozessor P. Über eine geeignete drahtlose Netzwerkschnittstelle, zum Beispiel über eine Funkverbindung oder eine Internetverbindung steht das Steuersystem 10 in Datenaustausch mit einem mobilen Endgerät H, das zum Beispiel als Smartphone, Tablet, Organizer oder als anderes mobiles digitales Gerät ausgebildet sein kann. Auf dem mobilen Endgerät H ist die Applikation App implementiert, die eine Interaktionsschnittstelle 105 bereitstellt. Alternativ oder kumulativ kann die App die Eingangsschnittstelle 101 bereitstellen, indem Auswahlfelder und/oder Schaltflächen bereitgestellt werden, die es dem Anwender ermöglichen, die Eingangsdaten in Form des Fahrzeugmodelldatensatzes e1 und des Baujahr-Datensatzes e2 einzugeben.

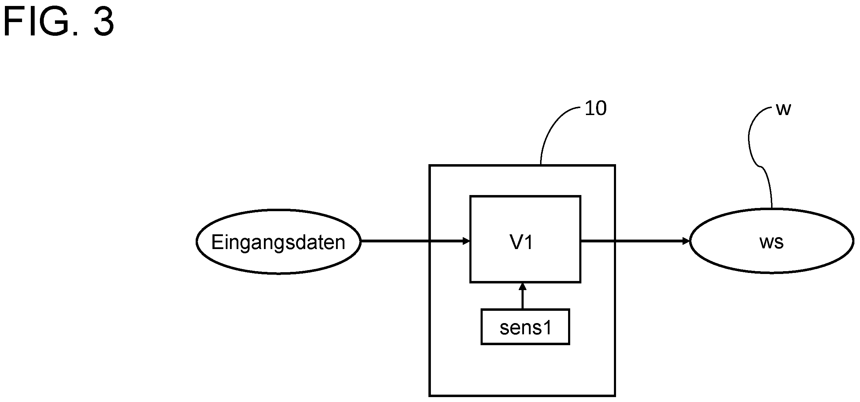

**Figur 3** zeigt eine weitere Ausführungsform des Steuersystems 10, bei der das Steuersystem 10 direkt eine erste Sensoreinheit sens1 aufweist, die dazu bestimmt ist, erste Sensordaten zu erfassen. Die ersten Sensordaten sind kennzeichnend oder zumindest mit-kennzeichnend für die Eingangsdaten e1, e2. Wenn zum Beispiel bekannt ist, dass ein Volvo V 70 aus dem Baujahr 2021 immer die Länge von 5,30m und die Höhe von 1,90m hat und ein Mini vom Typ Clubman aus dem Baujahr 2018 immer eine Länge von 4,25m und eine Höhe von 1,44m, dann kann die Länge und die Höhe als erste Sensordaten dienen, da sie zur Verifikation der Eingangsdaten dienen können. Das Steuersystem 10 weist weiterhin ein erstes Verifikationsmodul V1 auf, das dazu bestimmt ist, die erfassten Eingangsdaten mit den erfassten ersten Sensordaten zu vergleichen. Bei Übereinstimmung gelten die erfassten Eingangsdaten als verifiziert. Bei fehlender Übereinstimmung oder bei Abweichungen über einen vorkonfigurierbaren Schwellenwert kann eine Warnnachricht w an den Betreiber der Waschanlage ausgegeben werden mit einem Wechselsignal ws zum Wechsel von einem Featuremodell-basierten Waschprogramm auf ein Normalprogramm, um die Waschanlage WA im Normalprogramm zu betreiben. Dies dient der Sicherheit des Waschbetriebs und insbesondere dazu, zu vermeiden, dass fehlerhafte Eingangsdaten und/oder fehlerhaft berechnete Steuerdaten zu defizitären Einstellungen oder sogar zu einer fehlerhaften Wäsche führen. Alternativ kann die erste Sensoreinheit nicht direkt auf dem Steuersystem 10 implementiert sein (nicht gezeigt), sondern als externes Gerät bereitgestellt werden, das über eine entsprechende Schnittstelle mit demselben verbunden ist.

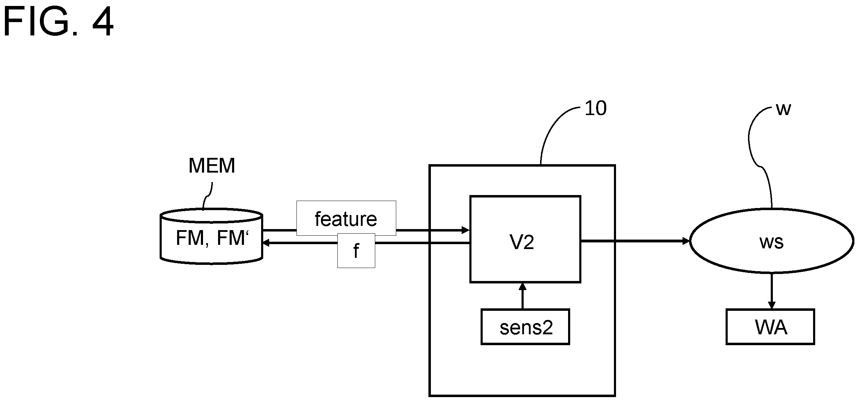

**Figur 4** zeigt eine weitere schematische Darstellung eines Ausführungsbeispiels, bei dem das Steuersystem 10, eine zweite Sensoreinheit sens2 aufweist, die dazu bestimmt ist, zweite Sensordaten zu erfassen. Die zweiten Sensordaten sind kennzeichnend oder zumindest mit-kennzeichnend für ein Feature. Das Steuersystem 10 weist weiterhin ein zweites Verifikationsmodul V2 auf, das zur algorithmischen und automatischen zweiten Verifikation der bestimmten Features verwendet werden kann. Dazu vergleicht das zweite Verifikationsmodul V2 die erfassten zweiten Sensordaten mit Daten, die den zuvor bestimmten Features zugeordnet sind, um bei Abweichungen eine Warnnachricht w an den Betreiber der Waschanlage mit einem Wechselsignal ws zum Wechsel von einem Featuremodell-basierten Programm in ein Normalprogramm auszugeben, und die Waschanlage WA im Normalprogramm zu betreiben und/oder ein Fehlersignal f an eine Recheneinheit zu senden, die das Featuremodell FM betreibt, das als Eintrag zu dem jeweiligen bestimmten Feature gespeichert wird. Alternativ kann die zweite Sensoreinheit nicht direkt auf dem Steuersystem 10 implementiert sein (nicht gezeigt), sondern als externes Gerät bereitgestellt werden, das über eine entsprechende Schnittstelle mit demselben verbunden ist.

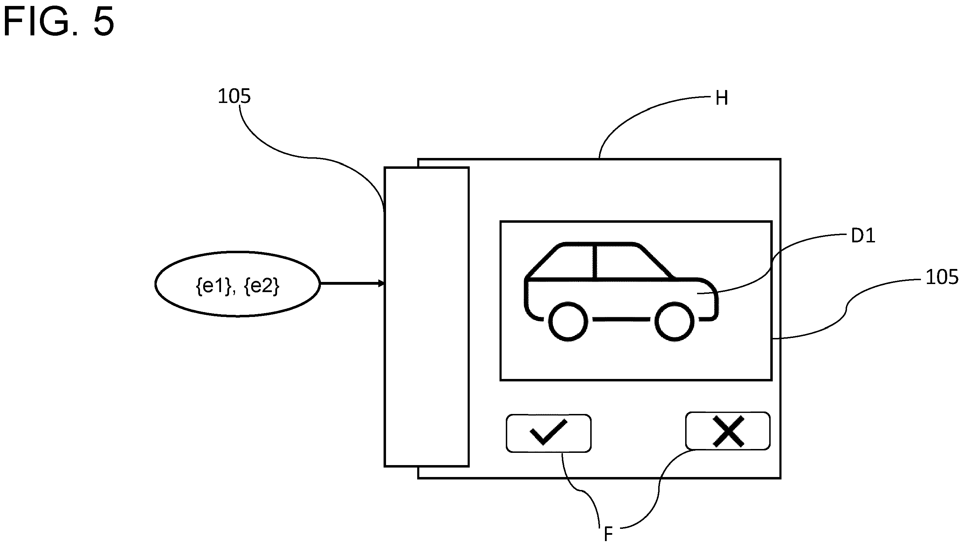

**Figur 5** zeigt in einer schematischen abstrahierten Darstellung das mobile Endgerät H mit einer Interaktionsschnittstelle 105. Die Interaktionsschnittstelle 105 kann konfiguriert sein, um die Eingangsdaten e1, e2 zu erfassen und kann somit die Funktionalität der Eingangsschnittstelle 101 umfassen. Die auf dem mobilen Endgerät H implementierte Applikation App ist dazu bestimmt, in Antwort auf die erfassten Eingangsdaten e1, e2 eine erste virtualisierte Darstellung D1 einer Fahrzeugkontur oder einer 2- oder 3-dimensionalen Ansicht des Fahrzeuges zu erzeugen und auf der Interaktionsschnittstelle 105 auszugeben. Deshalb ist das Bezugszeichen 105 in Fig. 5 zweimal verwendet, auch wenn es sich um ein und dieselbe Ausbildung der Interaktionsschnittstelle 105 handelt. Die Ausgabe der ersten virtualisierten Darstellung D1 auf der Interaktionsschnittstelle 105 dient zur Verifikation und Überprüfung der manuell vom Anwender eingegebenen Eingangsdaten. Über entsprechende Felder F auf der Interaktionsschnittstelle 105 kann der Anwender dann seine Eingaben verifizieren oder verwerfen und erhält nochmals die Gelegenheit, korrigierte Eingangsdaten einzugeben.

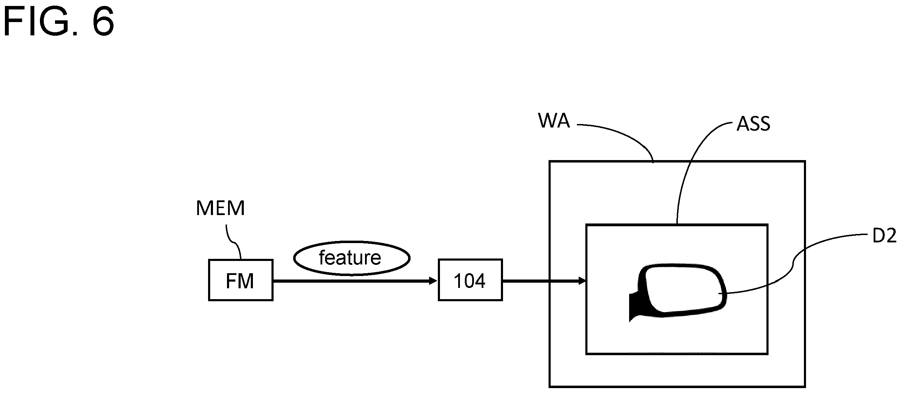

**Figur 6** zeigt ebenfalls in einer schematischen, abstrahierten Darstellung die lokale Recheneinheit 104, die dazu bestimmt ist, unter Zugriff auf das Feature Modell FM Features zu bestimmen und diese weiter zu verarbeiten. Um an dieser Stelle Fehler durch fehlerhaft bestimmte Features frühzeitig ausschließen zu können, kann eine z.B. grafische zweite virtualisierte Darstellung D2 der bestimmten Features erzeugt und auf einer Ausgabeschnittstelle ASS ausgegeben werden. Die Ausgabeschnittstelle ASS ist vorteilhafterweise auf einem Gerät ausgebildet, das dem Betreiber der Waschanlage WA zugeordnet ist. Hierbei kann es sich zum Beispiel auch um ein mobiles Gerät handeln oder um ein Terminal direkt an der Waschanlage WA. Durch die Anzeige der zweiten (graphischen) virtualisierten Darstellung der bestimmten Features, kann der Betreiber der Anlage WA einem Plausibilitätscheck durchführen.

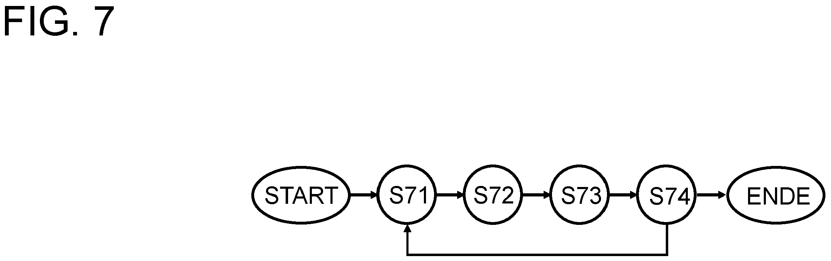

**Figur 7** ist ein Ablaufdiagramm eines Verfahrens zum Erzeugen eines Featuremodells FM. Nach dem Start wird in Schritt S71 eine Menge von 2D- oder 3D-Konturmodellen gespeichert und bereitgestellt und insbesondere für jeden Fahrzeugtyp ein 2D- oder 3D-Konturmodell. In Schritt S72 wird eine Menge von Features für jeden Fahrzeugtyp bzw. für jedes Fahrzeugmodell bestimmt. Dies wird vorzugsweise mittels eines Bildverarbeitungsalgorithmus ausgeführt. Dazu werden Extrema in den 2D/3D-Rohdaten des Konturmodells anhand der jeweiligen Positionsangabe in Bezug auf die Fahrzeuggeometrie verarbeitet. Dabei erfolgt ein Zugriff auf die gespeicherte Regelbasis. Im Folgenden sei ein abstrahiertes und sehr schematischeres Beispiel angegeben:
- Extrema an Position XY - und gegebenenfalls in Größe Z - wird zugeordnet Feature 1, zum Beispiel Spiegel;
- Extrema an Position UV in Länge L - wird zugeordnet Feature 2, zum Beispiel Heckspoiler;
- Etc.

In Schritt S73 wird für jedes Feature eine Kompressionsfunktion angewendet, um aus dem 2D- oder 3D-Konturmodell die relevanten Positionsdaten zu extrahieren, die das Feature betreffen. In Schritt S74 werden die extrahierten relevanten Positionsdaten für jedes Feature zum Erzeugen des Featuremodells FM gespeichert. Danach kann das Verfahren iterativ wieder bei Schritt S71 fortgesetzt werden oder es kann beendet werden.

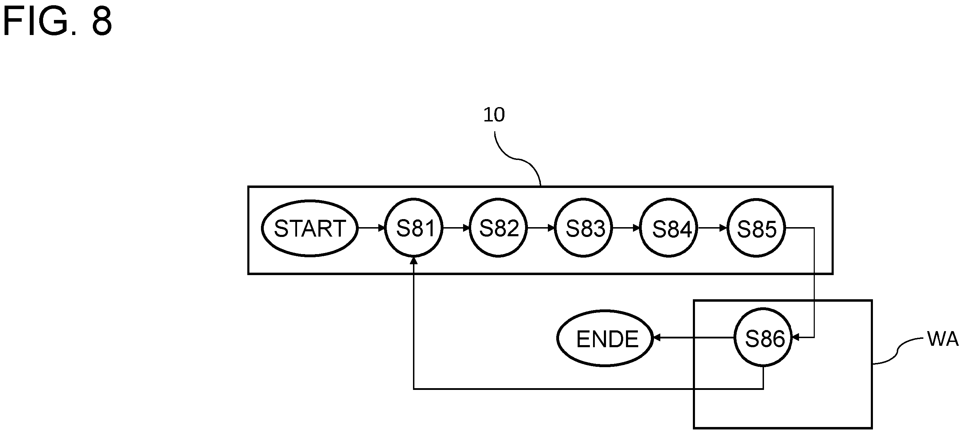

**Figur 8** zeigt ein Ablaufdiagramm für ein Betriebsverfahren zum Betreiben eines Steuersystems 10, wie vorstehend beschrieben. Nach dem Start werden in Schritt S81 die Eingangsdaten erfasst. Mittels der lokalen Recheneinheit 104 wird in Schritt S82 mit den erfassten Eingangsdaten auf den Speicher MEM zugegriffen, wobei in dem Speicher das Featuremodell FM oder ein Update des Featuremodells FM' gespeichert ist, das zu jeweils einem Satz von Eingangsdaten e1, e2 fahrzeugmodell-spezifische Features des Fahrzeugs auf zugeordnete Weise gespeichert hat, um die den erfassten Eingangsdaten zugeordneten Features zu bestimmen. In Schritt S83 wird mit den bestimmten Features auf den Prozessor P zugegriffen, wobei der Prozessor P dazu bestimmt ist, in Schritt S84 aus den bestimmten fahrzeugmodell-spezifischen Features Steuerdaten für eine Menge von Waschaggregaten Ai der Waschanlage WA zu berechnen, die einen fahrzeugmodell-spezifischen und waschanlagen-spezifischen Waschablauf für das Fahrzeug repräsentieren. In Schritt S85 werden die berechneten Steuerdaten an die Waschaggregate Ai der Waschanlage WA zur Steuerung und/oder Regelung (Schritt S86) derselben weitergeleitet, wobei die Steuerdaten alle Features des Fahrzeugtyps des Fahrzeugs und die Konfiguration der Waschanlage WA berücksichtigen. Wie in Figur 8 dargestellt, kann das Verfahren nach Schritt S86 wieder bei Schritt S81 wiederholt werden oder es kann beendet werden.

Das Update des Featuremodells FM' kann erzeugt werden, falls neue Features bestimmt worden sind, falls ein Fehlersignal f erfasst worden ist, insbesondere auf Basis der zweiten virtualisierten Darstellung (wie in Fig. 6 gezeigt) und/oder falls neue Daten zur Erzeugung und/oder Berechnung der Features vorliegen. Das ursprüngliche Featuremodell FM wird dann durch ein Update FM' ersetzt.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für die erwähnten Beispiele von Featuren/Merkmalen angewendet werden kann, sondern auch für andere Merkmale, die aus den Eingangsdaten mittels eines automatischen Verfahrens und unter Zugriff auf das Featuremodell abgeleitet werden können. Des Weiteren können die Bauteile des Steuersystems, wie z.B. die lokale Recheneinheit 104, der Prozessor P, die Ausgabeschnittstelle ASS und/oder der Speicher MEM zur Speicherung des Featuremodells auf einer Einheit/einem Gerät oder auf mehreren physikalisch-technischen Produkten verteilt realisiert sein.

## Patentansprüche

1. Steuersystem (10) für einer Waschanlage (WA) zum Bereitstellen von Steuerdaten zur Steuerung und/oder Regelung der Waschanlage (WA) zur Fahrzeugwäsche von Fahrzeugen, umfassend:
- Eine Eingangsschnittstelle (101) zum Erfassen von Eingangsdaten, die ein Fahrzeugmodell kennzeichnen und die zumindest einen Fahrzeugmodell-Datensatz (e1) und einen Baujahr-Datensatz (e2) des Fahrzeugs umfassen;
- Eine Modellschnittstelle (102) zu einem Speicher (MEM), in dem ein erzeugtes Featuremodell (FM) gespeichert ist, das zu jeweils einem Satz von Eingangsdaten fahrzeugmodell-spezifische Features des Fahrzeugs auf zugeordnete Weise gespeichert hat;
- Eine lokale Recheneinheit (104), die dazu bestimmt ist, mit den erfassten Eingangsdaten auf das Featuremodell (FM) zuzugreifen, um die den erfassten Eingangsdaten zugeordneten fahrzeugmodell-spezifischen Features des Fahrzeugs zu bestimmen;
- Eine Prozessorschnittstelle (103) zu einem Prozessor (P), wobei der Prozessor (P) dazu bestimmt ist, aus den bestimmten fahrzeugmodell-spezifischen Features Steuerdaten für eine Menge von Waschaggregaten (Ai) der Waschanlage (WA) zu berechnen, die einen fahrzeugmodell-spezifischen und waschanlagen-spezifischen Waschablauf für das Fahrzeug repräsentieren,
- wobei das Steuersystem (10) dazu bestimmt ist, die Waschaggregate (Ai) der Waschanlage (WA) mit den berechneten Steuerdaten anzusteuern, wobei die Steuerdaten alle Features des Fahrzeugs berücksichtigen,
- wobei das Steuersystem (10) eine erste Sensoreinheit (sens1) umfasst, die dazu bestimmt ist, erste Sensordaten zu erfassen, die kennzeichnend oder mit-kennzeichnend für die Eingangsdaten sind und die von einem ersten Verifikationsmodul (V1) zur algorithmischen und automatischen ersten Verifikation der erfassten Eingangsdaten verwendet werden, wobei das erste Verifikationsmodul (V1) dazu bestimmt ist, die zur Verifikation dienenden erfassten ersten Sensordaten mit den erfassten Eingangsdaten zu vergleichen, um bei Abweichungen von einem Featuremodell-basierten Programm in ein Normalprogramm zu wechseln, und die Waschanlage (WA) im Normalprogramm zu betreiben.

2. Steuersystem (10) nach Anspruch 1, bei dem die Waschanlage (WA) eine Portalanlage, eine Waschstraße oder eine Nutzfahrzeugwaschanlage ist.

3. Steuersystem (10) nach einem der vorangehenden Ansprüche, bei dem das Featuremodell (FM) mit einem automatischen Verfahren aus einem 2D- Konturmodell oder einem 3D-Konturmodell für ein Fahrzeug eines bestimmten Typs erstellt wird, das insbesondere Konturdaten für das jeweilige Fahrzeug umfasst.

4. Steuersystem (10) nach einem der vorangehenden Ansprüche, bei dem die Eingangsschnittstelle (101) als Mensch-Maschinen-Schnittstelle ausgebildet ist und deren Client-Anteil insbesondere in einer Applikation (A) auf einem mobilen Gerät (H) ausgebildet ist.

5. Steuersystem (10) nach einem der vorangehenden Ansprüche, bei dem das Steuersystem (10) eine Interaktionsschnittstelle (105) umfasst, deren Client-Anteil auf einem mobilen Gerät (H) ausgebildet sein kann und insbesondere zur Anzeige einer ersten virtualisierten Darstellung (D1) eingerichtet ist, wobei die erste virtualisierte Darstellung (D1) eine Fahrzeugkontur oder eine 2D-Ansicht des Fahrzeugtyps auf Basis der erfassten Eingangsdaten ist, die zur Verifikation der Eingangsdaten durch den Anwender dient.

6. Steuersystem (10) nach einem der vorangehenden Ansprüche, wobei bei den Abweichungen im Vergleich der erfassten ersten Sensordaten mit den erfassten Eingangsdaten eine Warnnachricht (w) an den Betreiber der Waschanlage (WA) mit einem Signal zum Wechsel (ws) vom Featuremodell-basierten Programm in das Normalprogramm ausgegeben wird.

7. Steuersystem (10) nach einem der vorangehenden Ansprüche, bei dem das Steuersystem (10) eine zweite Sensoreinheit (sens2) umfasst, die dazu bestimmt ist, zweite Sensordaten zu erfassen, die kennzeichnend oder mit-kennzeichnend für jeweils ein Feature sind und die von einem zweiten Verifikationsmodul (V2) zur algorithmischen und automatischen zweiten Verifikation der bestimmten Features verwendet werden, wobei das zweite Verifikationsmodul (V2) dazu bestimmt ist, die zur Verifikation dienenden erfassten zweiten Sensordaten mit Daten zu vergleichen, die den bestimmten Features zugeordnet sind, um bei Abweichungen eine Warnnachricht (w) an den Betreiber der Waschanlage mit einem Signal zum Wechsel (ws) von einem Featuremodell-basierten Programm in ein Normalprogramm auszugeben und die Waschanlage (WA) im Normalprogramm zu betreiben und/oder ein Fehlersignal (f) an eine Recheneinheit zu senden, die das Featuremodell betreibt, das als Eintrag zu dem jeweiligen bestimmten Feature gespeichert wird.

8. Steuersystem (10) nach dem unmittelbar vorangehenden Anspruch, bei dem die lokale Recheneinheit (104) dazu bestimmt ist, zu den bestimmten Features eine zweite virtualisierte Darstellung (D2) der bestimmten Features zu erzeugen und wobei eine Ausgabeschnittstelle (ASS) dazu bestimmt ist, die erzeugte zweite virtualisierte Darstellung (D2) zum Zwecke der Verifikation auszugeben.

9. Steuersystem (10) nach dem unmittelbar vorangehenden Anspruch, bei dem die mittels des Featuremodells bestimmten Features Positionsdaten und/oder Größenangaben von fahrzeugmodell-spezifischen Anbauten, Aus- und/oder Einbuchtungen in Bezug auf die Außenkontur des Fahrzeugs umfassen.

10. Steuersystem (10) nach einem der vorangehenden Ansprüche, bei dem das Featuremodell (FM) kontinuierlich erweiterbar und modifizierbar ist durch Änderung oder Hinzufügung von neuen Features, wobei das so erweiterte Featuremodell (FM') in einem Updatevorgang in den Speicher (MEM) eingespielt wird.

11. Computer-implementiertes Betriebsverfahren zum Betreiben eines Steuersystems (10) nach einem der vorangehenden Ansprüche zur Fahrzeugwäsche eines Fahrzeugs, mit folgenden Schritten:
- Erfassen (S81) von Eingangsdaten, die einen Fahrzeugtyp kennzeichnen und die zumindest einen Fahrzeugmodell-Datensatz (e1) und ein Baujahr-Datensatz (e2) des Fahrzeugs umfassen;
- Mittels der lokalen Recheneinheit (104): Zugreifen (S82) auf einen Speicher (MEM) mit den erfassten Eingangsdaten, wobei in dem Speicher ein Featuremodell (FM, FM') gespeichert ist, das zu jeweils einem Satz von Eingangsdaten fahrzeugmodellspezifische Features des Fahrzeugs auf zugeordnete Weise gespeichert hat, um die den erfassten Eingangsdaten zugeordneten Features zu bestimmen;
- Mittels der lokalen Recheneinheit (104): Zugreifen (S83) auf einen Prozessor (P) mit den bestimmten Features, wobei der Prozessor (P) dazu bestimmt ist, aus den bestimmten fahrzeugmodell-spezifischen Features Steuerdaten für eine Menge von Waschaggregaten (Ai) der Waschanlage (WA) zu berechnen (S84), die einen fahrzeugmodell-spezifischen und waschanlagen-spezifischen Waschablauf für das Fahrzeug repräsentieren,
- Mittels der lokalen Recheneinheit (104): Bereitstellen (S85) der berechneten Steuerdaten an die Waschaggregate (Ai) der Waschanlage (WA) zur Steuerung und/oder Regelung (S86) derselben, wobei die Steuerdaten alle Features des Fahrzeugtyps des Fahrzeugs und die Konfiguration der Waschanlage (WA) berücksichtigen,
- Mittels einer ersten Sensoreinheit (sonst): Erfassen von ersten Sensordaten, die kennzeichnend oder mit-kennzeichnend für die Eingangsdaten sind,
- Mittels eines ersten Verifikationsmoduls (V1): algorithmische und automatische erste Verifikation der erfassten Eingangsdaten, wobei die zur Verifikation dienenden erfassten ersten Sensordaten mit den erfassten Eingangsdaten verglichen, um bei Abweichungen von einem Featuremodell-basierten Programm in ein Normalprogramm zu wechseln, und die Waschanlage (WA) im Normalprogramm zu betreiben.

12. Computerprogramm, wobei das Computerprogramm in eine Speichereinheit einer lokalen Recheneinheit ladbar ist und Programmcodeabschnitte enthält, um die lokale Recheneinheit zu veranlassen, das Betriebsverfahren nach Anspruch 11 auszuführen, wenn das Computerprogramm in der lokalen Recheneinheit ausgeführt wird.

## Claims

1. Control system (10) for a washing system (WA) for providing control data for controlling and/or regulating the washing system (WA) for washing vehicles, comprising:
- An input interface (101) for acquiring input data characterizing a vehicle model and comprising at least a vehicle model data set (e1) and a year of manufacture data set (e2) of the vehicle;
- A model interface (102) to a memory (MEM) in which a generated feature model (FM) is stored, which has stored vehicle model-specific features of the vehicle in an assigned manner for a respective set of input data;
- A local computing unit (104) designed to access the feature model (FM) with the captured input data to determine the vehicle model-specific features of the vehicle associated with the captured input data;
- A processor interface (103) to a processor (P), wherein the processor (P) is intended to calculate, from the determined vehicle model-specific features, control data for a set of washing units (Ai) of the washing system (WA) which represent a vehicle model-specific and washing system-specific washing sequence for the vehicle,
- wherein the control system (10) is intended to control the washing units (Ai) of the washing system (WA) with the calculated control data, the control data taking into account all features of the vehicle,
- wherein the control system (10) comprises a first sensor unit (sens1) which is intended to acquire first sensor data which are characteristic or co-characterizing for the input data and which are used by a first verification module (V1) for algorithmic and automatic first verification of the acquired input data, wherein the first verification module (V1) is intended to compare the acquired first sensor data used for verification with the acquired input data in order to switch from a feature model-based program to a normal program in the event of deviations, and to operate the washing system (WA) in the normal program.

2. Control system (10) according to claim 1, in which the washing system (WA) is a portal system, a washing line or a commercial vehicle washing system.

3. Control system (10) according to one of the preceding claims, in which the feature model (FM) is created with an automatic method from a 2D contour model or a 3D contour model for a vehicle of a specific type, which in particular comprises contour data for the respective vehicle.

4. Control system (10) according to one of the preceding claims, in which the input interface (101) is designed as a man-machine interface and whose client part is designed in particular in an application (A) on a mobile device (H).

5. Control system (10) according to one of the preceding claims, wherein the control system (10) comprises an interaction interface (105), the client part of which can be formed on a mobile device (H) and is in particular set up to display a first virtualized representation (D1), wherein the first virtualized representation (D1) is a vehicle contour or a 2D view of the vehicle type based on the acquired input data, which is used for verification of the input data by the user.

6. Control system (10) according to one of the preceding claims, wherein a warning message (w) is output to the operator of the washing system (WA) with a signal to change (ws) from the feature model-based program to the normal program in the event of deviations in the comparison of the acquired first sensor data with the acquired input data.

7. Control system (10) according to one of the preceding claims, in which the control system (10) comprises a second sensor unit (sens2) which is intended to detect second sensor data which are indicative or co-indicative of a respective feature and which are used by a second verification module (V2) for algorithmic and automatic second verification of the determined features, the second verification module (V2) being intended to to compare the second sensor data recorded for verification with data which are assigned to the specific features in order to output a warning message (w) to the operator of the car wash with a signal for changing (ws) from a feature model-based program to a normal program in the event of deviations and to operate the car wash (WA) in the normal program and/or to send an error signal (f) to a computing unit which operates the feature model which is stored as an entry for the respective specific feature .

8. Control system (10) according to the immediately preceding claim, wherein the local computing unit (104) is intended to generate a second virtualized representation (D2) of the determined features and wherein an output interface (ASS) is intended to output the generated second virtualized representation (D2) for the purpose of verification.

9. Control system (10) according to the immediately preceding claim, in which the features determined by means of the feature model comprise position data and/or size data of vehicle model-specific attachments, protrusions and/or indentations in relation to the outer contour of the vehicle.

10. Control system (10) according to one of the preceding claims, in which the feature model (FM) can be continuously extended and modified by changing or adding new features, the feature model (FM') thus extended being loaded into the memory (MEM) in an update process.

11. A computer-implemented operating method for operating a control system (10) according to any one of the preceding claims for washing a vehicle, comprising the steps of:
- Acquiring (S81) of input data, characterizing a vehicle type and which comprises at least a vehicle model data set (e1) and a year of construction data set (e2) of the vehicle;
- By means of the local processing unit (104): accessing (S82) a memory (MEM) having the sensed input data, the memory having stored therein a feature model (FM, FM') which has stored vehicle model-specific features of the vehicle associated with a respective set of input data in an associated manner to determine the features associated with the sensed input data;
- By means of the local processing unit (104): accessing (S83) a processor (P) having the determined features, the processor (P) being intended to calculate (S84), from the determined vehicle model-specific features, control data for a set of washing units (Ai) of the washing system (WA) representing a vehicle model-specific and washing system-specific washing sequence for the vehicle,
- By means of the local computing unit (104): providing (S85) the calculated control data to the washing units (Ai) of the washing system (WA) for controlling and/or regulating (S86) the same, the control data taking into account all features of the vehicle type of the vehicle and the configuration of the washing system (WA),
- By means of a first sensor unit (sens1): Acquiring of first sensor data which are characteristic or co-characterizing for the input data,
- By means of a first verification module (V1): algorithmic and automatic first verification of the acquired input data, whereby the acquired first sensor data used for verification is compared with the acquired input data in order to switch from a feature model-based program to a normal program in the event of deviations, and to operate the washing system (WA) in the normal program.

12. Computer program, the computer program being loadable into a memory unit of a local computing unit and including program code portions for causing the local computing unit to execute the operating method according to claim 11 when the computer program is executed in the local computing unit.

## Revendications

1. Système de commande (10) pour une installation de lavage (WA) pour la mise à disposition de données de commande pour la commande et/ou la régulation de l'installation de lavage (WA) pour le lavage de véhicules, comprenant :
- une interface d'entrée (101) pour acquérir des données d'entrée qui caractérisent un modèle de véhicule et qui comprennent au moins un ensemble de données de modèle de véhicule (e1) et un ensemble de données d'année de construction (e2) du véhicule ;
- une interface de modèle (102) vers une mémoire (MEM) dans laquelle est stocké un modèle de caractéristiques généré (FM) qui, pour chaque ensemble de données d'entrée , a stocké des caractéristiques spécifiques au modèle de véhicule du véhicule d'une manière associée ;
- une unité de calcul locale (104) conçue pour accéder au modèle de caractéristiques (FM) avec les données d'entrée acquises afin de déterminer les caractéristiques du véhicule spécifiques au modèle de véhicule associées aux données d'entrée acquises ;
- une interface de processeur (103) vers un processeur (P), le processeur (P) étant destiné à calculer, à partir des caractéristiques déterminées spécifiques au modèle de véhicule, des données de commande pour un ensemble d'unités de lavage (Ai) de l'installation de lavage (WA), qui représentent une procédure de lavage spécifique au modèle de véhicule et spécifique à l'installation de lavage pour le véhicule,
- le système de commande (10) étant destiné à commander les unités de lavage (Ai) de l'installation de lavage (WA) avec les données de commande calculées, les données de commande tenant compte de toutes les caractéristiques du véhicule,
- dans lequel le système de commande (10) comprend une première unité de capteur (sens1) qui est destinée à acquérir des premières données de capteur qui sont caractéristiques ou co-caractéristiques des données d'entrée et qui sont utilisées par un premier module de vérification (V1) pour une première vérification algorithmique et automatique des données d'entrée acquises, le premier module de vérification (V1) étant destiné à comparer les premières données de capteur saisies servant à la vérification avec les données d'entrée saisies, afin de passer d'un programme basé sur un modèle de caractéristiques à un programme normal en cas d'écarts, et de faire fonctionner l'installation de lavage (WA) dans le programme normal.

2. Système de commande (10) selon la revendication 1, dans lequel l'installation de lavage (WA) est un portique, un tunnel de lavage ou une installation de lavage de véhicules utilitaires.

3. Système de commande (10) selon l'une des revendications précédentes, dans lequel le modèle de caractéristiques (FM) est créé par un procédé automatique à partir d'un modèle de contour 2D ou d'un modèle de contour 3D pour un véhicule d'un type déterminé, qui comprend notamment des données de contour pour le véhicule concerné.

4. Système de commande (10) selon l'une des revendications précédentes, dans lequel l'interface d'entrée (101) est réalisée sous forme d'interface homme-machine et dont la partie client est réalisée notamment dans une application (A) sur un appareil mobile (H).

5. Système de commande (10) selon l'une des revendications précédentes, dans lequel le système de commande (10) comprend une interface d'interaction (105) dont la partie client peut être réalisée sur un appareil mobile (H) et est notamment agencée pour afficher une première représentation virtualisée (D1), la première représentation virtualisée (D1) étant un contour de véhicule ou une vue 2D du type de véhicule sur la base des données d'entrée acquérir, qui sert à la vérification des données d'entrée par l'utilisateur.

6. Système de commande (10) selon l'une des revendications précédentes, dans lequel, en cas d'écarts dans la comparaison des premières données de capteur détectées avec les données d'entrée détectées, un message d'avertissement (w) est envoyé à l'exploitant de l'installation de lavage (WA) avec un signal pour passer (ws) du programme basé sur le modèle de caractéristiques au programme normal.

7. Système de commande (10) selon l'une des revendications précédentes, dans lequel le système de commande (10) comprend une deuxième unité de détection (sens2) destinée à acquérir des deuxièmes données de détection qui sont caractéristiques ou co- caractéristiques d'une caractéristique respective et qui sont utilisées par un deuxième module de vérification (V2) pour la deuxième vérification algorithmique et automatique des caractéristiques déterminées, le deuxième module de vérification (V2) étant destiné à , de comparer les deuxièmes données de capteur saisies servant à la vérification avec des données qui sont associées aux caractéristiques déterminées, afin d'émettre, en cas d'écarts, un message d'avertissement (w) à l'exploitant de l'installation de lavage avec un signal pour passer (ws) d'un programme basé sur le modèle de caractéristiques à un programme normal et d'exploiter l'installation de lavage (WA) dans le programme normal et/ou d'envoyer un signal d'erreur (f) à une unité de calcul qui exploite le modèle de caractéristiques qui est mémorisé comme entrée pour la caractéristique déterminée respective .

8. Système de commande (10) selon la revendication immédiatement précédente, dans lequel l'unité de calcul locale (104) est destinée à générer, pour les caractéristiques déterminées, une deuxième représentation virtualisée (D2) des caractéristiques déterminées et dans lequel une interface de sortie (ASS) est destinée à délivrer la deuxième représentation virtualisée (D2) générée à des fins de vérification.

9. Système de commande (10) selon la revendication immédiatement précédente, dans lequel les caractéristiques déterminées au moyen du modèle de caractéristiques comprennent des données de position et/ou des indications de taille d'éléments rapportés, de saillies et/ou de renfoncements spécifiques au modèle de véhicule par rapport au contour extérieur du véhicule.

10. Système de commande (10) selon l'une des revendications précédentes, dans lequel le modèle de caractéristiques (FM) peut être étendu et modifié en continu par modification ou ajout de nouvelles caractéristiques, le modèle de caractéristiques (FM') ainsi étendu étant introduit dans la mémoire (MEM) lors d'une opération de mise à jour.

11. Procédé de fonctionnement mis en oeuvre par ordinateur pour faire fonctionner un système de commande (10) selon l'une des revendications précédentes pour le lavage d'un véhicule, comprenant les étapes suivantes :
- l'acquisition (S81) de données d'entrée qui caractérisent un type de véhicule et qui comprennent au moins un ensemble de données de modèle de véhicule (e1) et un ensemble de données d'année de construction (e2) du véhicule ;
- au moyen de l'unité de calcul locale (104) : accéder (S82) à une mémoire (MEM) contenant les données d'entrée détectées, la mémoire stockant un modèle de caractéristiques (FM, FM') qui, pour chaque ensemble de données d'entrée, a stocké des caractéristiques du véhicule spécifiques au modèle de véhicule d'une manière associée, afin de déterminer les caractéristiques associées aux données d'entrée détectées ;
- au moyen de l'unité de calcul locale (104) : accéder (S83) à un processeur (P) ayant les caractéristiques déterminées, le processeur (P) étant destiné à calculer (S84), à partir des caractéristiques déterminées spécifiques au modèle de véhicule, des données de commande pour un ensemble d'unités de lavage (Ai) de l'installation de lavage (WA), qui représentent une procédure de lavage spécifique au modèle de véhicule et spécifique à l'installation de lavage pour le véhicule,
- au moyen de l'unité de calcul locale (104) : fournir (S85) les données de commande calculées aux unités de lavage (Ai) de l'installation de lavage (WA) pour la commande et/ou la régulation (S86) de celles-ci, les données de commande tenant compte de toutes les caractéristiques du type de véhicule du véhicule et de la configuration de l'installation de lavage (WA),
- au moyen d'une première unité de capteur (sens1) : l'acquisition de premières données de capteur qui sont caractéristiques ou co-caractéristiques des données d'entrée,
- au moyen d'un premier module de vérification (V1) : première vérification algorithmique et automatique des données d'entrée saisies, les premières données de capteur saisies servant à la vérification étant comparées aux données d'entrée saisies, afin de passer d'un programme basé sur un modèle de caractéristiques à un programme normal en cas d'écarts, et de faire fonctionner l'installation de lavage (WA) dans le programme normal.

12. Programme informatique, le programme informatique pouvant être chargé dans une unité de mémoire d'une unité de calcul locale et comprenant des sections de code de programme pour amener l'unité de calcul locale à exécuter le procédé de fonctionnement selon la revendication 11 lorsque le programme informatique est exécuté dans l'unité de calcul locale.
